(19) Europäisches Patentamt
European Patent Office
Office européen des brevets

(11) **EP 4 067 424 A1**

(12) **EUROPEAN PATENT APPLICATION**

(43) Date of publication:
**05.10.2022 Bulletin 2022/40**

(21) Application number: **21165697.0**

(22) Date of filing: **29.03.2021**

(51) International Patent Classification (IPC):
**C08K 3/105** (2018.01)   **C08K 3/22** (2006.01)
**C08K 3/26** (2006.01)   **C08K 3/28** (2006.01)

(52) Cooperative Patent Classification (CPC):
(C-Sets available)
**C08K 3/105; C08K 3/22; C08K 3/26;**
C08K 2003/222; C08K 2003/2227; C08K 2003/265;
C08K 2003/267; C08K 2003/282; C08K 2201/005;
C08K 2201/014                                    (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Omya International AG
4665 Oftringen (CH)**

(72) Inventors:
• **BATTISTI, Andrea
8050 Zürich (CH)**

• **FTOUNI, Jamal
4800 Zofingen (CH)**
• **ORLANDO, Fabrizio
5436 Würenlos (CH)**
• **EGGIMANN, Manuel
3014 Bern (CH)**

(74) Representative: **Maiwald Patent- und
Rechtsanwaltsgesellschaft mbH
Elisenhof
Elisenstraße 3
80335 München (DE)**

(54) **THERMALLY CONDUCTIVE FILLERS**

(57)     The present invention relates to a thermally conductive filler composition comprising a mixture of fillers comprising at least one inorganic aluminium compound and at least one inorganic magnesium compound, wherein the fillers are in form of particles having a volume median particle size $d_{50}$ from 0.1 to 500 μm, and the mixture of fillers comprises a first filler fraction A and a second filler fraction B. Furthermore, the present invention relates to a polymeric composition comprising the same as well as to the use of said thermally conductive filler composition.

Fig. 1

EP 4 067 424 A1

**(Cont. next page)**

(52) Cooperative Patent Classification (CPC): (Cont.)

C-Sets
**C08K 3/22, C08L 9/00;**
**C08K 3/26, C08L 9/00**

**Description**

The present invention relates to a thermally conductive filler composition, a polymeric composition comprising the same, an article comprising said polymeric composition as well as the use of said thermally conductive filler composition.

In electronic or electric devices, efficient heat dissipation from the device is indispensable for maintaining or improving device performance as well as achieving a long and reliable service life of the device. A key part of thermal management is to establish and enhance the heat transfer between heterogeneous material interfaces. Typically, thermal interface materials are used to enhance the thermal heat coupling between two components and may be employed, for example, in the form of pastes, adhesives, gap fillers, pads or tapes. For example, a thermal interface material may be inserted between a heat-producing device, e.g. an integrated circuit, battery cells, or lighting device, and a heat-dissipating device such as a heat sink or heat exchanger.

Thermal interface materials can be prepared by a number of known methods and a common approach is to blend thermally conductive fillers into a polymer matrix. Several ceramic materials with a high thermal conductivity such as aluminium nitride, boron nitride, silicon nitride, or silicon carbide have been extensively explored as fillers due to their electrical insulation and stability. Moreover, aluminium oxide is currently among the most commonly used materials for commercial thermally conductive fillers due to its low cost and high electric resistivity. Metals such as aluminium, silver, copper, or nickel are used as fillers when electrical insulation and lightweight are not considered for the applications (see Cui et al., J. Mater. Chem. C, 2020, 8, 10568 -10586).

As technology moves to sustainable energy and transportation, electric mobility is becoming increasingly important. Temperature management also plays a key role for the high-voltage batteries of electric vehicles. Battery cells can only deliver maximum performance within a certain temperature range and must not overheat. Moreover, the heating of modern lithium-ion batteries triggers a thermal reaction, which can swing itself up and cause a fire in the battery or even an explosion. In order to effectively transfer the heat caused by cell operation to the surroundings, a thermal gap filler is applied to the battery tray and the cell units are then installed on the liquid material. Currently, most thermal gap fillers are made from polymers that are filled with aluminium oxide or aluminium hydroxide. Although materials with significantly better thermal conductivity are available such as boron nitride or aluminum nitride, their high costs and the extreme thickening of formulations filled with those fillers makes them unsuitable for high volume automotive applications. Moreover, in order to achieve a sufficiently high thermal conductivity, the level of aluminium oxide or aluminium hydroxide filler within the thermal gap filler needs to be high. This may result in a high viscosity of the gap filler composition, and thus, to a high flow resistance, which undermines cost-efficient and fast production. Moreover, high filler content may severely wear the processing machines by increased abrasion, which, for example, may require to replace dosing machine components more frequently.

WO2004108852 A1 describes a process of making a thermal interface material, wherein a polymeric hot melt pressure sensitive adhesive having a number average molecular weight of greater than 25,000 is melt-blended with at least 25 weight percent of a thermally conductive filler to form a mixture and said mixture is formed into a thermal interface material. A composition comprising a thermally conductive filler, a plasticizer, acrylic acid, and an alkyl(meth)acrylate monomer is described in WO2021006646 A1.

Thus, there is an ongoing need in the art for the development of new thermally conductive filler materials, in particular thermally conductive filler materials which are suitable for high volume production at moderate costs.

Accordingly, it is in object of the present invention to provide a thermally conductive filler composition, which is suitable for high volume production at moderate costs. Furthermore, it would be desirable to provide a thermally conductive filler composition, wherein the particle size and morphology can be tailored and adapted to the envisaged application. It would also be desirable to provide a thermally conductive filler composition which exhibits a low rheology when blended with polymers, especially when blended at high filler concentrations. Furthermore, it would be desirable to provide a thermally conductive filler composition having a reduced abrasiveness.

It is also an object of the present invention to provide a thermally conductive filler composition which enhances the thermal conductivity of polymers and provides efficient heat dissipation. Furthermore, it would be desirable that the thermally conductive filler composition does not negatively affect the processability of polymeric materials filled with said composition. It would also be desirable to provide a thermally conductive filler composition, wherein the fillers are at least partially derivable from natural sources, are environmentally benign and inexpensive.

The foregoing and other objects are solved by the subject-matter as defined in the independent claims.

According to one aspect of the present invention, a thermally conductive filler composition is provided, comprising

a mixture of fillers comprising at least one inorganic aluminium compound and at least one inorganic magnesium compound,

wherein the fillers are in form of particles having a volume median particle size $d_{50}$ from 0.1 to 500 $\mu$m, and

the mixture of fillers comprises a first filler fraction A having a volume median particle size $d_{50}(A)$ and a second filler fraction B having a volume median particle size $d_{50}$(B),

wherein $d_{50}$(A) is greater than $d_{50}$(B) and $d_{50}$(A) differs from $d_{50}$(B) by at least 10%.

According to a further aspect of the present invention, a polymeric composition comprising at least one polymer and a thermally conductive filler composition according to the present invention is provided.

According to still a further aspect of the present invention, an article comprising the polymeric composition according to the present invention is provided, wherein the article is an electrical component, an electronic component, an automotive component, an aerospace component, a railway component, a maritime component, a medical component, a heat dissipating device, or a non-woven material, preferably an automotive power electrical component, an aerospace power electrical component, a railway power electrical component, a maritime power electrical component, a battery, a battery cell, a battery module, an integrated circuit, a light emitting diode, a lamp socket, a semiconductor package, a cooling fan, a connector, a switch, a case, a housing, an adhesive tape, an adhesive pad, an adhesive sheet, a vibration damping article, a gasket, a spacer, a sealant, a heat sink, a heat spreader, a fire blanket, or an oven cloth.

According to still a further aspect of the present invention, use of a thermally conductive filler composition according to the present invention as a thermal conductivity enhancer for a polymeric composition is provided.

According to still a further aspect of the present invention, use of a thermally conductive filler composition according to the present invention in aerospace applications, automotive applications, railway applications, maritime applications, electronic applications, electric vehicle applications, or medical applications is provided.

Advantageous embodiments of the present invention are defined in the corresponding subclaims.

According to one embodiment the thermally conductive filler composition has a thermal conductivity of at least 0.75 W/m·K, preferably at least 1 W/m·K, more preferably at least 1.2 W/m·K, and most preferably at least 1.5 W/m·K, wherein the thermal conductivity of the filler composition is measured in form of a standard polymer composition, wherein the standard polymer composition consists of 65 vol.-% filler composition and 35 vol.-% standard solution, wherein the standard solution consists of 50 wt.-% diisononyl-phthalat and 50 wt.-% hydroxyl-terminated polybutadiene, and the thermal conductivity is determined with a TEMPOS thermal properties analyzer equipped with a dual-needle SH-3 sensor.

According to one embodiment the thermally conductive filler composition comprises the first filler fraction A in an amount from 1 to 99 vol.-%, based on the total volume of the filler composition, preferably from 5 to 90 vol.-%, more preferably from 10 to 85 vol.-%, even more preferably from 20 to 80 vol.-%, and most preferably from 25 to 75 vol.-%, and the second filler fraction B in an amount from 1 to 99 vol.-%, based on the total volume of the filler composition, preferably from 10 to 95 vol.-%, more preferably from 15 to 90 vol.-%, even more preferably from 20 to 80 vol.-%, and most preferably from 25 to 75 vol.-%. According to a further embodiment the at least one inorganic aluminium compound is selected from the group consisting of aluminium hydroxide, aluminium oxide, aluminium nitride, and mixtures thereof, preferably aluminium hydroxide, and/or the at least one inorganic magnesium compound is selected from the group consisting of magnesium hydroxide, magnesium oxide, magnesium carbonate, and mixtures thereof, preferably magnesium oxide.

According to one embodiment the fillers have a volume median particle size $d_{50}$ from 0.5 to 450 $\mu$m, preferably from 1 to 400 $\mu$m, more preferably from 1.5 to 300 $\mu$m, and most preferably from 2 to 250 $\mu$m, and/or the first filler fraction A has a volume median particle size $d_{50}$(A) from 10 to 450 $\mu$m, preferably from 15 to 400 $\mu$m, more preferably from 20 to 300 $\mu$m, and most preferably from 25 to 250 $\mu$m, and/or the second filler fraction B has a volume median particle size $d_{50}$(B) from 0.1 to 250 $\mu$m, preferably from 0.5 to 200 $\mu$m, more preferably from 1 to 100 $\mu$m, and most preferably from 2 to 70 $\mu$m. According to a further embodiment $d_{50}$(A) differs from $d_{50}$(B) by at least 15%, preferably by at least 20%, more preferably by at least 25%, and most preferably by at least 30%.

According to one embodiment the mixture of fillers comprises a third filler fraction C having a volume median particle size $d_{50}$(C), wherein $d_{50}$(C) is smaller than $d_{50}$(B) and $d_{50}$(C) differs from $d_{50}$(B) by at least 10%, or dso(C) is greater than $d_{50}$(A) and dso(C) differs from $d_{50}$(A) by at least 10%. According to a further embodiment the thermally conductive filler composition comprises at least one additional filler, preferably in an amount from 0.1 to 50 vol.-%, based on the total volume of the filler composition, more preferably in an amount from 1 to 40 vol.-%, and most preferably from 2 to 30 vol.-%.

According to one embodiment the at least one additional filler is selected from the group consisting of calcium carbonate, calcium oxide, calcium hydroxide, talc, zinc oxide, boron nitride, graphite, metallic fillers, and mixtures thereof, preferably the at least one additional filler is selected from the group consisting of calcium carbonate, calcium oxide, calcium hydroxide, and mixtures thereof, and most preferably the at least one additional filler is calcium carbonate. According to a further embodiment the first filler fraction A comprises the at least one inorganic aluminium compound and the second filler fraction B comprises the at least one inorganic magnesium compound, and/or the first filler fraction A comprises the at least one inorganic magnesium compound and the second filler fraction B comprises the at least one inorganic aluminum compound. According to still a further embodiment the first filler fraction A comprises the at least one additional filler and/or the second filler fraction B comprises the at least one additional filler and/or the third filler fraction C comprises the at least one additional filler, preferably the at least one additional filler is selected from the group consisting of calcium carbonate, calcium oxide, calcium hydroxide, and mixtures thereof, and most preferably the at least one additional filler is calcium carbonate.

According to one embodiment the polymeric composition comprises the thermally conductive filler composition in an amount of at least 50 vol.-%, based on the total volume of the polymeric composition, preferably in an amount of at least 60 vol.-%, more preferably in an amount of at least 70 vol-%, and most preferably in an amount of at least 80 vol.-%. According to a further embodiment the at least one polymer is a resin, a thermoplastic polymer, an elastomer, or a mixture thereof, preferably the at least one polymer is selected from the group consisting of an epoxy resin, an acrylic resin, an urethane resin, a silicone resin, a phenolic resin, homopolymer and/or copolymer of polyolefin, polyamide, polystyrene, polyacrylate, polyvinyl, polyurethane, halogen-containing polymer, polyester, polycarbonate, acrylic rubber, butadiene rubber, acrylonitrile-butadiene rubber, epichlorohydrin rubber, isoprene rubber, ethylene-propylene rubber, ethylene-propylene-diene rubber, nitrile-butadiene rubber, butyl rubber, styrene-butadiene rubber, polyisoprene, hydrogenated nitrile-butadiene rubber, carboxylated nitrile-butadiene rubber, chloroprene rubber, isoprene isobutylene rubber, chloro-isobutene-isoprene rubber, brominated isobutene-isoprene rubber, silicone rubber, fluorocarbon rubber, polyurethane rubber, polysulfide rubber, thermoplastic rubber, and mixtures thereof.

According to one embodiment the polymeric composition is a thermally conductive masterbatch, a thermally conductive grease, a thermally conductive moldable composition, a thermally conductive extrusionable composition, a thermally conductive gap filler, a thermally conductive adhesive, a thermally conductive gel, a thermally conductive potting compound, a thermally conductive encapsulation agent, or a thermally conductive paste.

It should be understood that for the purpose of the present invention, the following terms have the following meaning:

"Natural ground calcium carbonate" (GCC) in the meaning of the present invention is a calcium carbonate obtained from natural sources, such as limestone, marble, or chalk, and processed through a wet and/or dry treatment such as grinding, screening and/or fractionating, for example, by a cyclone or classifier.

"Precipitated calcium carbonate" (PCC) in the meaning of the present invention is a synthesised material, obtained by precipitation following reaction of carbon dioxide and lime in an aqueous, semi-dry or humid environment or by precipitation of a calcium and carbonate ion source in water. PCC may be in the vateritic, calcitic or aragonitic crystal form. PCCs are described, for example, in EP2447213 A1, EP2524898 A1, EP2371766 A1, EP1712597 A1, EP1712523 A1, or WO2013142473 A1.

The "particle size" of fillers herein is described as volume-based particle size distribution. The volume median particle size $d_{50}$(vol) or the volume top cut particle size $d_{98}$(vol), measured using a Malvern Mastersizer 2000 or 3000 Laser Diffraction System, indicates a diameter value such that 50% or 98% by volume, respectively, of the particles have a diameter of less than this value. The raw data obtained by the measurement are analysed using the Mie theory, with a particle refractive index of 1.57 and an absorption index of 0.005.

As used herein the term "polymer" generally includes homopolymers and co-polymers such as, for example, block, graft, random and alternating copolymers, as well as blends and modifications thereof. The polymer can be an amorphous polymer, a crystalline polymer, or a semi-crystalline polymer, i.e. a polymer comprising crystalline and amorphous fractions. The degree of crystallinity is specified in percent and can be determined by differential scanning calorimetry (DSC). An amorphous polymer may be characterized by its glass transition temperature and a crystalline polymer may be characterized by its melting point. A semi-crystalline polymer may be characterized by its glass transition temperature and/or its melting point.

The term "copolymer" as used herein refers to a polymer derived from more than one species of monomer. Copolymers that are obtained by copolymerization of two monomer species may also be termed bipolymers, those obtained from three monomers terpolymers, those obtained from four monomers quaterpolymers, etc. (cf. IUPAC Compendium of Chemical Terminology 2014, "copolymer"). Accordingly, the term "homopolymer" refers to a polymer derived from one species of monomer.

The term "glass transition temperature" in the meaning of the present invention refers to the temperature at which the glass transition occurs, which is a reversible transition in amorphous materials (or in amorphous regions within semi-crystalline materials) from a hard and relatively brittle state into a molten or rubber-like state. The glass-transition temperature is always lower than the melting point of the crystalline state of the material, if one exists. The term "melting point" in the meaning of the present invention refers to the temperature at which a solid changes state from solid to liquid at atmospheric pressure. At the melting point the solid and liquid phase exist in equilibrium. Glass-transition temperature and melting point are determined by ISO 11357 with a heating rate of 10°C/min.

Unless indicated otherwise, the "moisture content" of a material refers to the percentage of moisture (i.e. water) which may be desorbed from a sample upon heating to 220 °C. The moisture content may be measured according to the Karl Fischer coulometric titration method, desorbing the moisture in an oven at 220 °C for at least 10 min and passing it continuously into a Karl Fischer coulometer (Mettler Toledo coulometric KF Titrator C30, combined with Mettler Toledo oven DO 0337) using dry nitrogen at 100 ml/min for at least 10 min. A calibration curve using water may be recorded and a blank of 10 min nitrogen flow without a sample taken into account.

The term "surface-reacted" in the meaning of the present application shall be used to indicate that a material has been subjected to a process comprising partial dissolution of said material in aqueous environment followed by a crystallization process on and around the surface of said material, which may occur in the absence or presence of further crystallization additives.

The term "surface-treated filler" in the meaning of the present invention refers to a filler which has been contacted with a surface treatment agent such as to obtain a coating layer on at least a part of the surface of the filler.

The "specific surface area" (expressed in $m^2/g$) of a material as used throughout the present document can be determined by the Brunauer Emmett Teller (BET) method with nitrogen as adsorbing gas and by use of an ASAP 2460 instrument from Micromeritics. The method is well known to the skilled person and defined in ISO 9277:2010. Samples are conditioned at 100°C under vacuum for a period of 30 min prior to measurement. The total surface area (in $m^2$) of said material can be obtained by multiplication of the specific surface area (in $m^2/g$) and the mass (in g) of the material.

A "solution" as referred to herein is understood to be a single phase mixture of a specific solvent and a specific solute, for example a single phase mixture of a water-soluble salt and water. The term "dissolved" as used herein thus refers to the physical state of a solute in a solution.

A "suspension" or "slurry" in the meaning of the present invention comprises undissolved solids and water, and optionally further additives, and usually contains large amounts of solids and, thus, is more viscous and can be of higher density than the liquid from which it is formed.

For the purpose of the present invention, the term "viscosity" or "Brookfield viscosity" refers to Brookfield viscosity. The Brookfield viscosity is for this purpose measured by a Brookfield DV-II+ Pro viscometer at 25 °C $\pm$ 1 °C at 100 rpm using an appropriate spindle of the Brookfield RV-spindle set and is specified in mPa·s. Based on his technical knowledge, the skilled person will select a spindle from the Brookfield RV-spindle set which is suitable for the viscosity range to be measured. For example, for a viscosity range between 200 and 800 mPa·s the spindle number 3 may be used, for a viscosity range between 400 and 1 600 mPa·s the spindle number 4 may be used, for a viscosity range between 800 and 3 200 mPa·s the spindle number 5 may be used, for a viscosity range between 1 000 and 2 000 000 mPa·s the spindle number 6 may be used, and for a viscosity range between 4 000 and 8 000 000 mPa·s the spindle number 7 may be used.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

According to the present invention, a thermally conductive filler composition comprising a mixture of fillers comprising at least one inorganic aluminium compound and at least one inorganic magnesium compound is provided. The fillers are in form of particles having a volume median particle size $d_{50}$ from 0.1 to 500 $\mu$m, and the mixture of fillers comprises a first filler fraction A having a volume median particle size $d_{50}$(A) and a second filler fraction B having a volume median particle size $d_{50}$(B), wherein $d_{50}$(A) is greater than $d_{50}$(B) and dso(A) differs from $d_{50}$(B) by at least 10%.

In the following details and preferred embodiments of the inventive composition will be set out in more details. It is to be understood that these technical details and embodiments also apply to the inventive method, uses, and products containing the inventive composition.

**Thermally conductive filler composition**

The thermally conductive filler composition according to the present invention comprises a mixture of fillers comprising at least one inorganic aluminum compound and at least one inorganic magnesium compound.

The at least one inorganic aluminium compound may be selected from any suitable inorganic aluminium compound known in the art such as aluminium hydroxide, aluminium oxide, aluminium nitride, aluminium carbide, aluminium oxynitride, zirconia toughened alumina, or aluminium silicate. According to one embodiment the at least one inorganic aluminium compound is selected from the group consisting of aluminium hydroxide, aluminium oxide, aluminium nitride, and mixtures thereof, preferably aluminium hydroxide.

The at least one inorganic magnesium compound may be selected from any suitable inorganic magnesium compound known in the art such as magnesium hydroxide, magnesium oxide, magnesium carbonate, magnesium silicon nitride, magnesium aluminate, dolomite, magnesium silicate, or magnesium metasilicate. According to one embodiment

the at least one inorganic magnesium compound is selected from the group consisting of magnesium hydroxide, magnesium oxide, magnesium carbonate, and mixtures thereof, preferably magnesium oxide.

For the purpose of the present invention, the term "magnesium oxide" also comprises magnesium oxide grades that have been further processed such as caustic calcined magnesia, hard burned magnesia, dead burned magnesia, sintered magnesia, or fused magnesia. Calcining magnesium oxide at lower temperature (700 to 1000°C) produces light-burned magnesia, a reactive form, which is also known as caustic calcined magnesia. Hard-burned magnesia, which has limited reactivity, is produced at calcining temperatures from 1000 to 1500°C. Dead-burned magnesia is a low reactive magnesium oxide, which has been subjected to high temperatures from 1500 to 2000°C to diminish the available surface area. Fused magnesia is produced at temperatures above the fusion point of magnesium oxide (2800°C) and is an unreactive grade of magnesium oxide.

According to one embodiment the magnesium oxide is natural magnesium oxide, synthetic magnesium oxide, caustic calcined magnesia, hard burned magnesia, dead burned magnesia, sintered magnesia, fused magnesia, or a mixture thereof.

According to another embodiment the at least one inorganic aluminium compound is selected from the group consisting of aluminium hydroxide, aluminium oxide, aluminium nitride, and mixtures thereof, preferably aluminium hydroxide, and the at least one inorganic magnesium compound is selected from the group consisting of magnesium hydroxide, magnesium oxide, magnesium carbonate, and mixtures thereof, preferably magnesium oxide.

The at least one inorganic aluminium compound may be a single inorganic aluminium compound or a mixture of two or more inorganic aluminium compounds. The at least one inorganic magnesium compound may be a single inorganic magnesium compound or a mixture of two or more inorganic aluminium compounds. For example, the at least one inorganic magnesium compound may be a mixture of different grades of magnesium oxide. According to a preferred embodiment the at least one inorganic aluminium compound is aluminium hydroxide and the at least one inorganic magnesium compound is magnesium oxide, preferably natural magnesium oxide, synthetic magnesium oxide, caustic calcined magnesia, hard burned magnesia, dead burned magnesia, sintered magnesia, fused magnesia, or a mixture thereof.

Depending on the source of origin and the production method, the at least one inorganic aluminium compound and/or the at least inorganic magnesium compound may also comprise impurities such as calcium, iron, silicon, sodium, manganese, chloride, boron, or aluminium. Said impurities may be present in an amount of less than 10 wt.-%, based on the total weight of the at least one inorganic aluminium compound and/or the at least inorganic magnesium compound.

The fillers of the mixtures of fillers are in form of particles having a volume median particle size $d_{50}$ from 0.1 to 500 $\mu$m. According to one embodiment, the fillers have a volume median particle size $d_{50}$ from 0.5 to 450 $\mu$m, preferably from 1 to 400 $\mu$m, more preferably from 1.5 to 300 $\mu$m, and most preferably from 2 to 250 $\mu$m. According to one embodiment, the fillers have a volume median particle size $d_{50}$ from 0.5 to 300 $\mu$m, preferably from 1 to 200 $\mu$m, more preferably from 1.5 to 100 $\mu$m, and most preferably from 2 to 50 $\mu$m. According to another embodiment, the fillers have a volume median particle size $d_{50}$ from 1 to 450 $\mu$m, preferably from 10 to 400 $\mu$m, more preferably from 20 to 300 $\mu$m, and most preferably from 50 to 250 $\mu$m.

According to the present invention, the mixture of fillers comprises at least two different filler fractions having different particle size distributions, i.e. different volume median particle sizes $d_{50}$. Thus, the mixture of fillers may be a mixture of a coarse filler fraction and a fine filler fraction.

The mixture of fillers comprises a first filler fraction A having a volume median particle size $d_{50}$(A), and a second filler fraction B having a volume median particle size $d_{50}$(B), wherein $d_{50}$(A) is greater than $d_{50}$(B) and $d_{50}$(A) differs from $d_{50}$(B) by at least 10%. According to one embodiment $d_{50}$(A) differs from $d_{50}$(B) by at least 15%, preferably by at least 20%, more preferably by at least 25%, and most preferably by at least 30%. According to another embodiment $d_{50}$(A) differs from $d_{50}$(B) by at least 40%, preferably by at least 80%, more preferably by at least 150%, and most preferably by at least 200%. According to still another embodiment $d_{50}$(A) differs from $d_{50}$(B) by at least 10 $\mu$m, preferably by at least 20 $\mu$m, more preferably by at least 30 $\mu$m, and most preferably by at least 40 $\mu$m.

According to one embodiment the first filler fraction A has a volume median particle size $d_{50}$(A) from 10 to 450 $\mu$m, preferably from 15 to 400 $\mu$m, more preferably from 20 to 300 $\mu$m, and most preferably from 25 to 250 $\mu$m, and/or the second filler fraction B has a volume median particle size $d_{50}$(B) from 0.1 to 250 $\mu$m, preferably from 0.5 to 200 $\mu$m, more preferably from 1 to 100 $\mu$m, and most preferably from 2 to 70 $\mu$m.

According to one embodiment, the fillers have a volume median particle size $d_{98}$ from 2 to 1200 $\mu$m, preferably from 10 to 800 $\mu$m, more preferably from 20 to 700 $\mu$m, and most preferably from 50 to 600 $\mu$m.

In order to obtain the desired particle size distribution, the filler particles may be ground and/or sieved. Suitable methods are known in the art.

Depending on the difference between $d_{50}$(A) and $d_{50}$(B) and the weight ratio between the first filler fraction A and the second filler fraction B, the overall particles size distribution curve of the mixture of fillers may exhibit at least two peaks. According to a preferred embodiment of the present invention, the overall particle size distribution curve of the mixture of fillers being composed of the particle size distribution curve of the first filler fraction A and the particle size distribution curve of the second filler fraction B is a bimodal particle size distribution curve.

According to one embodiment, the fillers have a specific surface area of from 0.1 $m^2$/g to 150 $m^2$/g, preferably from 0.5 $m^2$/g to 100 $m^2$/g, and more preferably from 1 $m^2$/g to 75 $m^2$/g, measured using nitrogen and the BET method.

The first filler fraction A may be present in an amount from 1 to 99 vol.-%, based on the total volume of the filler composition, and the second filler fraction B may be present in an amount from 1 to 99 vol.-%, based on the total volume of the filler composition. According to one embodiment, the first filler fraction A is present in an amount from 5 to 90 vol.-%, preferably from 10 to 85 vol.-%, more preferably from 20 to 80 vol.-%, and most preferably from 25 to 75 vol.-%, based on the total volume of the filler composition, and the second filler fraction B is present in an amount from 10 to 95 vol.-%, preferably from 15 to 90 vol.-%, more preferably from 20 to 80 vol.-%, and most preferably from 25 to 75 vol.-%, based on the total volume of the filler composition.

According to one embodiment, the first filler fraction A is present in an amount from 1 to 99 wt.-%, preferably from 5 to 90 wt.-%, more preferably from 10 to 85 wt.-%, even more preferably from 20 to 80 wt.-%, and most preferably from 25 to 75 wt.-%, based on the total weight of the filler composition, and the second filler fraction B is present in an amount from 1 to 99 wt.-%, preferably from 10 to 95 wt.-%, more preferably from 15 to 90 wt.-%, even more preferably from 20 to 80 wt.-%, and most preferably from 25 to 75 wt.-%, based on the total weight of the filler composition.

The filler fractions may be selected independently from the filler materials. For example, one filler fraction may comprise at least one inorganic aluminium compound and the other filler fraction may comprise at least one inorganic magnesium compound. However, it would also be within the teaching of the present invention that one filler fraction comprises at least one inorganic aluminium compound and at least one inorganic magnesium compound, while the other filler fraction comprises only at least one inorganic magnesium compound or at least one aluminium compound. Furthermore, both filler fractions may comprise at least one inorganic aluminium compound and at least one magnesium compound.

According to one embodiment the first filler fraction A comprises the at least one inorganic aluminium compound and the second filler fraction B comprises the at least one inorganic magnesium compound. Additionally or alternatively, the first filler fraction A may comprise the at least one inorganic magnesium compound and the second filler fraction B may comprises the at least one inorganic aluminum compound.

According to one embodiment the first filler fraction A comprises at least one inorganic aluminium compound and at least one inorganic magnesium compound and the second filler fraction B comprises at least one inorganic magnesium compound. According to another embodiment the first filler fraction A comprises at least one inorganic aluminium compound and at least one inorganic magnesium compound and the second filler fraction B comprises at least one inorganic aluminium compound.

According to one embodiment the first filler fraction A comprises at least one inorganic aluminium compound and the second filler fraction B comprises at least one inorganic aluminum compound and at least one inorganic magnesium compound. According to another embodiment the first filler fraction A comprises at least one inorganic magnesium compound and the second filler fraction B comprises at least one inorganic aluminum compound and at least one inorganic magnesium compound. According to still another embodiment the first filler fraction A comprises at least one inorganic aluminium compound and at least one inorganic magnesium compound and the second filler fraction B comprises at least one inorganic aluminum compound and at least one inorganic magnesium compound.

According to one embodiment, the thermally conductive filler composition consists of a mixture of fillers consisting of at least one inorganic aluminium compound and at least one inorganic magnesium compound. According to a preferred embodiment, the thermally conductive filler composition consists of a mixture of fillers consisting of at least one inorganic aluminium compound selected from the group consisting of aluminium hydroxide, aluminium oxide, aluminium nitride, and mixtures thereof, and at least one inorganic magnesium compound selected from the group consisting of magnesium hydroxide, magnesium oxide, magnesium carbonate, and mixtures thereof. According to another preferred embodiment, the thermally conductive filler composition consists of a mixture of fillers consisting of aluminium hydroxide and magnesium oxide.

According to one preferred embodiment, the fillers are in form of particles having a volume median particle size $d_{50}$ from 1.5 to 300 $\mu$m, preferably from 2 to 250 $\mu$m,
the first filler fraction A has a volume median particle size $d_{50}$(A) from 20 to 300 $\mu$m, preferably from 25 to 250 $\mu$m,
the second filler fraction B has a volume median particle size $d_{50}$(B) from 1 to 100 $\mu$m, preferably from 2 to 70 $\mu$m, and
$d_{50}$(A) differs from $d_{50}$(B) by at least 30%, preferably at least 40%, more preferably at least 80%, even more preferably at least 150%, and most preferably by at least 200%. In addition,
preferably the first filler fraction A may comprise at least one inorganic magnesium compound and the filler fraction B may comprise at least one aluminium compound.

The filler composition of the present invention is "thermally conductive", i.e. it is able to conduct heat. The mixture of fillers is selected such that the desired level of thermal conductivity of the final thermally conductive filler composition is provided. For example, the desired thermal conductivity may be obtained by mixing fillers having a higher thermal conductivity with fillers having a lower thermal conductivity. The thermal conductivity of the thermally conductive filler composition may be measured by any suitable method known to the skilled person and is expressed in W/m·K.

According to one embodiment the thermal conductivity is measured in form of a standard polymer composition that consists of 65 vol.-% filler composition and 35 vol.-% standard solution. The standard solution may consist of 50 wt.-% diisononyl-phthalat and 50 wt.-% hydroxyl-terminated polybutadiene. The thermal conductivity may be determined with a TEMPOS thermal properties analyzer equipped with a dual-needle SH-3 sensor (METER Group AG, Germany).

According to one embodiment, the thermally conductive filler composition has a thermal conductivity of at least 0.75 W/m·K, preferably at least 1 W/m·K, more preferably at least 1.2 W/m·K, and most preferably at least 1.5 W/m·K, wherein the thermal conductivity of the filler composition is measured in form of a standard polymer composition, wherein the standard polymer composition consists of 65 vol.-% filler composition and 35 vol.-% standard solution, wherein the standard solution consists of 50 wt.-% diisononyl-phthalat and 50 wt.-% hydroxyl-terminated polybutadiene, and the thermal conductivity is determined with a TEMPOS thermal properties analyzer equipped with a dual-needle SH-3 sensor.

According to one embodiment, the thermally conductive filler composition comprises a mixture of fillers comprising at least one inorganic aluminium compound and at least one inorganic magnesium compound, wherein the fillers are in form of particles having a volume median particle size $d_{50}$ from 0.1 to 500 $\mu$m, and the fillers comprise a first filler fraction A having a volume median particle size $d_{50}(A)$ and a second filler fraction B having a volume median particle size $d_{50}(B)$, wherein $d_{50}(A)$ is greater than $d_{50}(B)$ and $d_{50}(A)$ differs from $d_{50}(B)$ by at least 10%,
wherein the composition comprises the first filler fraction A in an amount from 1 to 99 vol.-%, based on the total volume of the filler composition, and the second filler fraction B in an amount from 1 to 99 vol.-%, based on the total volume of the filler composition, and
wherein the thermally conductive filler composition has a thermal conductivity of at least 0.75 W/m·K, wherein the thermal conductivity of the filler composition is measured in form of a standard polymer composition, wherein the standard polymer composition consists of 65 vol.-% filler composition and 35 vol.-% standard solution, wherein the standard solution consists of 50 wt.-% diisononyl-phthalat and 50 wt.-% hydroxyl-terminated polybutadiene, and the thermal conductivity is determined with a TEMPOS thermal properties analyzer equipped with a dual-needle SH-3 sensor.

The thermally conductive filler composition may be prepared by mixing the fillers in dry or wet form, and preferably in dry form. The moisture content of a dry filler may be less than 5.0 wt.-%, based on the total weight of the filler, preferably less than 2.5 wt.-%, and more preferably less than 1.0 wt.-%.

The thermally conductive filler composition of the present invention may comprise further components.

According to one embodiment the mixture of fillers comprises a third filler fraction C having a volume median particle size $d_{50}(C)$, wherein $d_{50}(C)$ is smaller than $d_{50}(B)$ and $d_{50}(C)$ differs from $d_{50}(B)$ by at least 10%, or $d_{50}(C)$ is greater than $d_{50}(A)$ and $d_{50}(C)$ differs from $d_{50}(A)$ by at least 10%. Thus, the mixture of fillers may be a mixture of a coarse filler fraction, a mid filler fraction, and a fine filler fraction.

According to one embodiment $d_{50}(C)$ is smaller than $d_{50}(B)$ and $d_{50}(C)$ differs from $d_{50}(B)$ by at least 15%, preferably by at least 20%, more preferably by at least 25%, and most preferably by at least 30%. According to another embodiment $d_{50}(C)$ is greater than $d_{50}(A)$ and $d_{50}(C)$ differs from $d_{50}(A)$ by at least 15%, preferably by at least 20%, more preferably by at least 25%, and most preferably by at least 30%. According to one embodiment $d_{50}(C)$ is smaller than $d_{50}(B)$ and $d_{50}(C)$ differs from $d_{50}(B)$ by at least 5 $\mu$m, preferably by at least 10 $\mu$m, more preferably by at least 15 $\mu$m, and most preferably by at least 20 $\mu$m. According to another embodiment $d_{50}(C)$ is greater than $d_{50}(A)$ and $d_{50}(C)$ differs from $d_{50}(A)$ by at least 5 $\mu$m, preferably by at least 10 $\mu$m, more preferably by at least 15 $\mu$m, and most preferably by at least 20 $\mu$m.

According to one embodiment, the third filler fraction C has a volume median particle size $d_{50}(C)$ from 0.1 to 500 $\mu$m, preferably from 0.5 to 450 $\mu$m, more preferably from 1 to 400 $\mu$m, even more preferably from 1.5 to 300 $\mu$m, and most preferably from 2 to 250 $\mu$m. According to another embodiment, the third filler fraction C has a volume median particle size $d_{50}(C)$ from 0.1 to 250 $\mu$m, preferably from 0.5 to 200 $\mu$m, more preferably from 1 to 150 $\mu$m, even more preferably from 1.5 to 100 $\mu$m, and most preferably from 2 to 50 $\mu$m.

Depending on the difference between $d_{50}(A)$, $d_{50}(B)$, and $d_{50}(C)$ and the weight ratio between the first filler fraction A, the second filler fraction B, and third filler fraction C, the overall particles size distribution curve of the mixture of fillers may exhibit at least two peaks, preferably three peaks. According to a preferred embodiment of the present invention, the overall particle size distribution curve of the mixture of fillers being composed of the particle size distribution curve of the first filler fraction A, the particle size distribution curve of the second filler fraction B, and the particle size distribution curve of the third filler fraction C is a trimodal particle size distribution curve.

According to one embodiment, the thermally conductive filler composition comprises at least one additional filler, preferably in an amount from 0.1 to 50 vol.-%, based on the total volume of the filler composition, more preferably in an amount from 1 to 40 vol.-%, and most preferably from 2 to 30 vol.-%. According to another embodiment, the thermally conductive filler composition comprises at least one additional filler, preferably in an amount from 0.1 to 50 wt.-%, based on the total weight of the filler composition, more preferably in an amount from 1 to 40 wt.-%, and most preferably from 2 to 30 wt.-%.

The additional filler may be selected from any suitable filler known in the art. According to one embodiment the at least one additional filler is selected from the group consisting of calcium carbonate, calcium oxide, calcium hydroxide, talc, zinc oxide, boron nitride, graphite, metallic fillers, and mixtures thereof, preferably the at least one additional filler is selected from the group consisting of calcium carbonate, calcium oxide, calcium hydroxide, and mixtures thereof, and most preferably the at least one additional filler is calcium carbonate. Examples of metallic fillers are particles of metals selected from the group consisting of aluminium, copper, nickel, tin, silver, iron, alloys thereof, and mixtures thereof. According to one embodiment, the calcium carbonate is selected from ground calcium carbonate (GCC), precipitated calcium carbonate (PCC), surface-reacted calcium carbonate, and mixtures thereof. Surface-reacted calcium carbonate is a reaction product of natural ground calcium carbonate or precipitated calcium carbonate with carbon dioxide and one or more $H_3O^+$ ion donors, wherein the carbon dioxide is formed in situ by the $H_3O^+$ ion donors treatment and/or is supplied from an external source. Further details about the preparation of the surface-reacted calcium carbonate are disclosed, for example, in WO0039222 A1, WO2004083316 A1, WO2005121257 A2, WO2009074492 A1, EP2264108 A1, EP2264109 A1, US20040020410 A1, and WO2009074492 A1.

The shape of the at least one additional filler is not specifically restricted. Examples of filler shapes encompass: spherical or rounded particles, agglomerated particles, a tubular shape, a nanotubular shape, a wire shape, a rod shape, a needle shape, a plate shape, an amorphous shape, a rugby ball shape, a hexahedral shape, or mixtures thereof.

According to one embodiment, the at least on additional filler has a spherical or rounded shape. According to one embodiment, the at least one additional filler is in form of particles having a volume median particle size $d_{50}$ from 0.1 to 500 $\mu$m, preferably from 0.5 to 450 $\mu$m, more preferably from 1 to 400 $\mu$m, even more preferably from 1.5 to 300 $\mu$m, and most preferably from 2 to 250 $\mu$m. According to another embodiment, the at least one additional filler is in form of particles having a volume median particle size $d_{50}$ from 0.1 to 250 $\mu$m, preferably from 0.5 to 200 $\mu$m, more preferably from 1 to 150 $\mu$m, even more preferably from 1.5 to 100 $\mu$m, and most preferably from 2 to 50 $\mu$m.

According to another embodiment the at least one additional filler has a plate shape. According to one embodiment, the platelets may have an aspect ratio of at least 1:2, preferably at least 1:4, more preferably at least 1:6, and most preferably at least 1:8. The "aspect ratio" in the meaning of the present invention refers to the ratio of the longest dimension to the shortest dimension of a particle and may determined by using scanning electron microscopy.

According to one embodiment, the at least one additional filler is selected from the group consisting of talc, zinc oxide, boron nitride, graphite, metallic fillers, and mixtures thereof. According to another embodiment, the at least one additional filler is selected from the group consisting of calcium carbonate, calcium oxide, calcium hydroxide, and mixtures thereof.

Depending on the types of fillers contained in the thermally conductive filler composition, the thermally conductive filler composition may be electrically conductive or electrically insulating. For the purpose of the present invention, "electrically insulating" means having an electric resistance of not less than $1*10^9$ $\Omega \cdot$m. According to one embodiment, the inventive thermally conductive filler composition is also electrically insulating. Suitable examples of electrically insulating fillers are calcium carbonate, calcium oxide, calcium hydroxide, talc, boron nitride, and mixtures thereof.

According to one embodiment the first filler fraction A comprises the at least one additional filler and/or the second filler fraction B comprises the at least one additional filler and/or the third filler fraction C, if present, comprises the at least one additional filler, wherein preferably the at least one additional filler is selected from the group consisting of calcium carbonate, calcium oxide, calcium hydroxide, and mixtures thereof, and most preferably the at least one additional filler is calcium carbonate. According to one embodiment the first filler fraction A comprises the at least one additional filler and/or the second filler fraction B comprises the at least one additional filler, wherein preferably the at least one additional filler is selected from the group consisting of calcium carbonate, calcium oxide, calcium hydroxide, and mixtures thereof, and most preferably the at least one additional filler is calcium carbonate. Additionally or alternatively, the mixture of fillers comprises a third filler fraction C and the third filler fraction C comprises the at least one additional filler, wherein preferably the at least one additional filler is selected from the group consisting of calcium carbonate, calcium oxide, calcium hydroxide, and mixtures thereof, and most preferably the at least one additional filler is calcium carbonate.

According to a preferred embodiment, the thermally conductive filler composition comprises a mixture of fillers comprising at least one inorganic aluminium compound and at least one inorganic magnesium compound, wherein the fillers are in form of particles having a volume median particle size $d_{50}$ from 0.1 to 500 $\mu$m, the mixture of fillers comprises

a first filler fraction A having a volume median particle size $d_{50}$(A),
a second filler fraction B having a volume median particle size $d_{50}$(B),
a third filler fraction C having a volume median particle size $d_{50}$(C),
wherein $d_{50}$(A) is greater than $d_{50}$(B) and $d_{50}$(A) differs from $d_{50}$(B) by at least 10%, dso(C) is smaller than $d_{50}$(B) and $d_{50}$(C) differs from $d_{50}$(B) by at least 10%, or $d_{50}$(C) is greater than $d_{50}$(A) and $d_{50}$(C) differs from $d_{50}$(A) by at least 10%,
the first filler fraction A has a volume median particle size $d_{50}$(A) from 10 to 450 $\mu$m, preferably from 15 to 400 $\mu$m, more preferably from 20 to 300 $\mu$m, and most preferably from 25 to 250 $\mu$m,
the second filler fraction B has a volume median particle size $d_{50}$(B) from 0.1 to 250 $\mu$m, preferably from 0.5 to 200 $\mu$m,

more preferably from 1 to 100 $\mu$m, and most preferably from 2 to 70 $\mu$m,

the third filler fraction C has a volume median particle size $d_{50}$(C) from 0.1 to 250 $\mu$m, preferably from 0.5 to 200 $\mu$m, more preferably from 1 to 150 $\mu$m, even more preferably from 1.5 to 100 $\mu$m, and most preferably from 2 to 50 $\mu$m,

the first filler fraction A is present in an amount from 1 to 99 vol.-%, based on the total volume of the filler composition, preferably from 5 to 90 vol.-%, more preferably from 10 to 85 vol.-%, even more preferably from 20 to 80 vol.-%, and most preferably from 25 to 75 vol.-%, and

the second filler fraction B is present in an amount from 1 to 99 vol.-%, based on the total volume of the filler composition, preferably from 10 to 95 vol.-%, more preferably from 15 to 90 vol.-%, even more preferably from 20 to 80 vol.-%, and most preferably from 25 to 75 vol.-%, and

the thermally conductive filler composition preferably comprises at least one additional filler, preferably in an amount from 0.1 to 50 vol.-%, based on the total volume of the filler composition, more preferably in an amount from 1 to 40 vol.-%, and most preferably from 2 to 30 vol.-%. In addition, preferably the at least one inorganic aluminium compound may be selected from the group consisting of aluminium hydroxide, aluminium oxide, aluminium nitride, and mixtures thereof, preferably aluminium hydroxide, and/or the at least one inorganic magnesium compound may be selected from the group consisting of magnesium hydroxide, magnesium oxide, magnesium carbonate, and mixtures thereof, preferably magnesium oxide and/or the at least one additional filler, if present, may be selected from the group consisting of calcium carbonate, calcium oxide, calcium hydroxide, talc, zinc oxide, boron nitride, graphite, metallic fillers, and mixtures thereof, preferably the at least one additional filler is selected from the group consisting of calcium carbonate, calcium oxide, calcium hydroxide, and mixtures thereof, and most preferably the at least one additional filler is calcium carbonate. Furthermore, it may be preferred that the first filler fraction A comprises the at least one additional filler, the second filler fraction B comprises the at least one inorganic magnesium compound, and the third filler fraction C comprises the at least one inorganic aluminium compound.

According to one embodiment, the mixture of fillers comprises further filler fractions, for example, a filler fraction D having a volume median particle size $d_{50}$(D), a filler fraction F having a volume median particle size $d_{50}$(F), etc. The $d_{50}$ values of said further filler fractions may be greater or smaller than $d_{50}$(A) and/or $d_{50}$(B) and/or $d_{50}$(C) and may differ from $d_{50}$(A) and/or $d_{50}$(B) and/or $d_{50}$(C) by at least 10%.

To facilitate the dispersion, in some embodiments, the fillers may be surface-treated, for example, with silanes or fatty acids.

The inventors surprisingly found that the inventive thermally conductive filler composition provides efficient packing of the filler particles, and can therefore be incorporated in high amounts into polymeric formulations while maintaining a processable viscosity of the polymer-filler blend. This in turn provides the possibility of producing polymeric compositions having a high thermal conductivity. One advantage of the present invention is that said high thermal conductivity can be obtained by using less expensive filler materials such as aluminium hydroxide and magnesium oxide. It was also found that the inventive thermally conductive filler compositions exhibits a lower abrasiveness compared to conventional thermally conductive filler compositions. Furthermore, it was found that adding an additional filler selected from calcium carbonate, calcium oxide, calcium hydroxide, and mixtures thereof, preferably calcium carbonate, may further lower the viscosity of a polymer-filler blend. Moreover, said fillers can be obtained from natural resources and are non-toxic.

The thermally conductive filler composition of the present invention may be in dry form or in form of a suspension. Preferably, the thermally conductive filler composition is in dry form, preferably in form of a powder. The moisture content of the dry thermally conductive filler composition may be less than 5.0 wt. %, based on the total weight of the thermally conductive filler composition, preferably less than 2.5 wt. %, and more preferably less than 1.0 wt. %.

Alternatively, the thermally conductive filler composition may be provided in form of an aqueous suspension, preferably having a solids content of at least 20 wt.-%, preferably at least 40 wt.-%, more preferably at least 60 wt.-%, and most preferably at 80 wt.-%, based on the total weight of the suspension. For the purpose of the present invention, the "solids content" of a liquid composition is a measure of the amount of material remaining after all the solvent or water has been evaporated. If necessary, the "solids content" of a suspension given in wt. % in the meaning of the present invention can be determined using a Moisture Analyzer HR73 from Mettler-Toledo (T = 120 °C, automatic switch off 3, standard drying) with a sample size of 5 to 20 g.

## Polymeric composition

The thermally conductive filler composition of the present invention can be advantageously implemented in polymeric compositions. In a further aspect the present invention thus refers to a polymeric composition comprising at least one polymer and a thermally conductive filler composition according to the present invention.

The skilled person will understand that the amount of the thermally conductive filler composition included in the polymeric composition will depend upon a variety of factors including the amount and type of polymer, amount and type of the fillers included in the thermally conductive filler composition, and the end use of the article made using the polymeric composition.

According to one embodiment the polymeric composition comprises the thermally conductive filler composition in an amount of at least 50 vol.-%, based on the total volume of the polymeric composition, preferably in an amount of at least 60 vol.-%, more preferably in an amount of at least 70 vol.-%, and most preferably in an amount of at least 80 vol.-%.

The at least one polymer may comprise any suitable polymer known in the art. For example, the at least one polymer may comprise homopolymers, copolymers, such as, for example, block, graft, random and alternating copolymers, heterophasic copolymers and random heterophasic copolymers as well as polymer blends, modifications, or mixtures thereof. The at least one polymer can also comprise recycled polymer materials. The content of recycled polymers in the at least one polymer may be in the range from 0.01 to 100 wt.%, based on the total weight of the at least one polymer.

The expression "at least one" polymer means that one or more types of polymer may be present in the inventive polymer composition. According to one embodiment the at least one polymer may be a single polymer. According to another embodiment that the at least one polymer may be a mixture of two or more types of polymers.

According to one embodiment, the at least one polymer is selected from a resin, a thermoplastic polymer, an elastomer, or a mixture thereof.

Examples of suitable resins are an epoxy resin, an acrylic resin, an urethane resin, a silicone resin, or a phenolic resin.

Examples of suitable elastomers are acrylic rubber, butadiene rubber, acrylonitrile-butadiene rubber, epichlorohydrin rubber, isoprene rubber, ethylene-propylene rubber, ethylene-propylene-diene rubber, nitrile-butadiene rubber, butyl rubber, styrene-butadiene rubber, polyisoprene, hydrogenated nitrile-butadiene rubber, carboxylated nitrile-butadiene rubber, chloroprene rubber, isoprene isobutylene rubber, chloro-isobutene-isoprene rubber, brominated isobutene-isoprene rubber, silicone rubber, fluorocarbon rubber, polyurethane rubber, polysulfide rubber, or thermoplastic rubber.

Preferably said at least one polymer may be selected from at least one thermoplastic polymer. Such thermoplastic polymers suitable for the present invention may comprise without being limited to:

- Polymers from olefins and diolefins, for example, polyethylenes (LDPE, LLDPE, VLDPE, ULDPE, MDPE, HDPE, UHMWPE), polypropylene, polybutylene, polyisobutylene, poly-4-methyl-pentene-1, polybutadiene, polyisoprene, polycyclooctene, as well random or block copolymers, such as ethylene/but-1-ene copolymers, ethylene-hexene copolymers, ethylene-methylpentene copolymers, ethylene-octene copolymers, polypropylene-polyethylene (EP), EPM, EPDM, ethylene-vinylacetat (EVA), and ethylene-acrylic ester copolymers,
- Polystyrene, polymethylstyrene, styrene-butadiene copolymers (SB), styrene-butadiene-styrene (SBS) and its hydrogenated polymer (SEBS), styrene-isoprene, styrene-isoprene-styrene (SIS), styrene-butadiene-acrylonitrile (ABS), styrene-acrylonitrile-acrylate (ASA), styrene-maleic anhydride, and grafted polymers, for example, styrene-grafted butadiene, maleic acid anhydride-grafted SBS, or grafted polymers from methylmethacrylate, styrene-butadiene and ABS (MABS),
- Halogen containing polymers such as polyvinylchloride, polychloroprene, polyvinylidene chloride, chlorinated polyethylene, or polytetrafluoroethylene,
- Polymers from unsaturated esters such as polyacrylates, or polymethacrylates, for example, polymethylmethacrylate, polyacrylonitrile, polyacrylamide, polybutylacrylate,
- Polymers derived from unsaturated alcohols such as polyvinylalcohol, polyvinylacetate, or polyvinylbutyral (PVB),
- Polyacetales, for example, polyoxymethylene and copolymers thereof,
- Polyphenylene oxide as well as polystyrene or polyamide blends thereof,
- Polyurethanes (PU), in particular linear polyurethanes (TPU),
- Polyamides (PA), such as PA-6, PA-6.6, PA-6.10, PA-4.6, PA-4.10, PA-6.12, PA-12.12, PA-11, PA-12 as well as partially aromatic polyamides (e.g. polyphthalamides),
- Polyimides, polyamidimides, polyetherimides, polyketones, polysulphones, polyethersulphones, and polyphenylensulphides,
- Polyethyleneterephthalate (PET), polybutyleneterephthalate (PBT), polypropyleneterephthalate, polyethylenenaphthylate,
- Polycarbonates,
- Cellulose derivatives, such as cellulose nitrate, cellulose acetate, or cellulose propionate,
- Partially or fully bio-based polymers derived from renewable biomass sources, such as vegetable fats and oils, corn starch, pea starch, or microbiota, aliphatic biopolyesters, such as polyhydroxyalkanoates (PHA), polyhydroxybutyrate (PHB), polyhydroxyvalerate (PHV), polyhydroxyhexanoate (PHH), or polyesters such as polylactic acid (PLA),
- Blends, mixtures, alloys and combinations comprising at least one of the above polymers.

According to one embodiment, the at least one polymer is a thermoplastic polymer being selected from the group consisting of homopolymers and/or copolymers of polyolefins, polyamides, polystyrenes, polyacrylates, polyvinyls, polyurethanes, halogen-containing polymers, polyesters, polycarbonates, and mixtures thereof.

According to one embodiment, the at least one polymer is a polyolefin being selected from the group of homo- and/or copolymers of polyethylene, homo- and/ or copolymers of polypropylene, homo- and/or copolymers of polybutylene, or mixtures thereof. According to another embodiment, the at least one polymer is a polyolefin comprising a polyethylene, a polypropylene, a polybutylene, or mixtures thereof. For example, the at least one polymer may be selected from the group comprising low density polyethylene (LDPE), linear low density polyethylene (LLDPE), high density polyethylene (HDPE), polypropylene (PP) such as polypropylene homopolymers, random polypropylene, heterophasic polypropylene or block copolymers including polypropylene units, polystyrene (PS), high impact polystyrene (HI-PS), and polyacrylate.

According to one embodiment the at least one polymer is a resin, a thermoplastic polymer, an elastomer, or a mixture thereof, preferably the at least one polymer is selected from the group consisting of an epoxy resin, an acrylic resin, an urethane resin, a silicone resin, a phenolic resin, homopolymer and/or copolymer of polyolefin, polyamide, polystyrene, polyacrylate, polyvinyl, polyurethane, halogen-containing polymer, polyester, polycarbonate, acrylic rubber, butadiene rubber, acrylonitrile-butadiene rubber, epichlorhydrin rubber, isoprene rubber, ethylene-propylene rubber, ethylene-propylene-diene rubber, nitrile-butadiene rubber, butyl rubber, styrene-butadiene rubber, polyisoprene, hydrogenated nitrile-butadiene rubber, carboxylated nitrile-butadiene rubber, chloroprene rubber, isoprene isobutylene rubber, chloro-isobutene-isoprene rubber, brominated isobutene-isoprene rubber, silicone rubber, fluorocarbon rubber, polyurethane rubber, polysulfide rubber, thermoplastic rubber, and mixtures thereof.

The at least one polymer may further comprise one or more additives which are well known to the skilled person. Such additives comprise, without being limited to, UV-absorbers, light stabilizers, processing stabilizers, antioxidants, heat stabilizers, nucleating agents, metal deactivators, impact modifiers, plasticizers, lubricants, rheology modifiers, processing aids, pigments, dyes, optical brighteners, antimicrobials, antistatic agents, slip agents, anti-block agents, coupling agents, dispersants, compatibilizers, oxygen scavengers, acid scavengers, markers, antifogging agents, surface modifiers, flame retardants, blowing agents, smoke suppressors, reinforcement agents, such as glass fibres, carbon fibres and/or glass bubbles, or mixtures of the foregoing additives. The amount of additives will depend on the envisaged application area and may be in a range from 0 to 20 wt.-%, based on the total weight of the polymeric composition.

Methods for blending the at least one polymer and the thermally conductive filler composition are not particularly limited and known in the art. For example, the at least one polymer can be combined with the thermally conductive filler composition and optional other components and blended and intimately mixed using conventional mixing techniques or processed in several different ways, e.g. by melt blending or solution blending.

According to one embodiment, the polymeric composition is produced by melt blending the at least one polymer and the thermally conductive filler composition. Melt blending involves the use of shear force, extensional force, compressive force, ultrasonic energy, electromagnetic energy, thermal energy or combinations comprising at least one of the foregoing forces or forms of energy and is conducted in processing equipment, wherein the aforementioned forces or forms of energy are exerted by a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, or combinations comprising at least one of the foregoing. Melt blending involving the aforementioned forces may be conducted in machines such as single or multiple screw extruders, Buss kneader, Henschel, helicones, Ross mixer, Banbury, roll mills, molding machines such as injection molding machines, vacuum forming machines, blow molding machine, or the like, or combinations comprising at least one of the foregoing machines.

Alternatively, the at least one polymer is provided in powder form, in pellet form, sheet form, or the like, may be first dry blended with the thermally conductive filler composition in a Henschel or in a roll mill, prior to being fed into a melt blending device such as an extruder or Buss kneader. The thermally conductive filler composition may be also introduced into the melt blending device in the form of a masterbatch. In such a process, the masterbatch may be introduced into the melt blending device downstream of the point where the at least one polymer is introduced.

The at least one polymer and the thermally conductive filler composition can also be mixed by grinding, stirring, milling, or tumbling, and may be subjected to multiple blending and forming steps. For example, the moldable composition may first be extruded and formed into pellets. The pellets may then be fed into a molding machine where it may be formed into any desirable shape or product.

Alternatively, solution blending may be used to produce the polymeric composition according to the present invention. The solution blending may also use additional energy such as shear, compression, ultrasonic vibration, or the like, to promote homogenization of the thermally conductive filler composition within the at least one polymer.

According to one embodiment the polymeric composition is a thermally conductive masterbatch, a thermally conductive grease, a thermally conductive moldable composition, a thermally conductive extrusionable composition, a thermally conductive gap filler, a thermally conductive adhesive, a thermally conductive gel, a thermally conductive potting compound, a thermally conductive encapsulation agent, or a thermally conductive paste.

According to one embodiment, the polymeric composition has a thermal conductivity of at least 0.75 W/m·K, preferably at least 1 W/m·K, more preferably at least 1.2 W/m·K, and most preferably at least 1.5 W/m·K. According to one embodiment the thermal conductivity is measured in form of a standard polymer composition that consists of 65 vol.-% filler composition and 35 vol.-% standard solution. The standard solution may consist of 50 wt.-% diisononyl-phthalat and 50 wt.-% hydroxyl-terminated polybutadiene. The thermal conductivity may be determined with a TEMPOS thermal properties analyzer equipped with a dual-needle SH-3 sensor (METER Group AG, Germany).

The polymeric composition of the present invention may be employed in a variety of applications, for example, aerospace applications, automotive applications, railway applications, maritime applications, electronic applications, electric vehicle applications, or medical applications. According to a further aspect of the present invention, use of a thermally conductive filler composition according to the present invention in aerospace applications, automotive applications, railway applications, maritime applications, electronic applications, electric vehicle applications, or medical applications is provided. Preferably, the thermally conductive filler composition according to the present invention may be used in automotive applications, and more preferably in automotive power electrical applications. For example, the thermally conductive filler composition according to the present invention may be used in gap fillers for battery modules or battery cells for electric vehicles.

According to a further aspect of the present invention, an article comprising the polymeric composition according to the present invention is provided, wherein the article is an electrical component, an electronic component, an automotive component, an aerospace component, a railway component, a maritime component, an medical component, a heat dissipating device, or a non-woven material, preferably an automotive power electrical component, aerospace power electrical component, a railway power electrical component, a maritime power electrical component, a battery, a battery cell, a battery module, an integrated circuit, a light emitting diode, a lamp socket, a semiconductor package, a cooling fan, a connector, a switch, a case, a housing, an adhesive tape, an adhesive pad, an adhesive sheet, a vibration damping article, a gasket, a spacer, a sealant, a heat sink, a heat spreader, a fire blanket, or an oven cloth.

According to one embodiment, the article is a battery module comprising a plurality of battery cells connected to a base plate by a layer of a thermally conductive gap filler comprising the thermally conductive filler composition of the present invention.

According to still a further aspect, use of a thermally conductive filler composition according to the present invention as a thermal conductivity enhancer for a polymeric composition is provided.

The scope and interest of the invention will be better understood based on the following examples which are intended to illustrate certain embodiments of the present invention and are non-limitative.

**Examples**

**1. Materials and methods**

**1.1. Fillers**

| Filler | | $d_{50}$ [µm] | $d_{98}$ [µm] | BET[ $m^2$/g] |
|---|---|---|---|---|
| Calcium Carbonate 1 | CC1 | 38.9 | 114 | 0.7 |
| Magnesium Oxide 1 | MGO1 | 200 | 440 | 0.2 |
| Magnesium Oxide 2 | MGO2 | 27.5 | 111 | 0.6 |
| Aluminium Hydroxide 1 | ATH1 | 2.1 | 6 | 2.0 |
| Aluminium Hydroxide 2 | ATH2 | 61.3 | 172 | -- |
| Aluminium Hydroxide 3 | ATH3 | 6.8 | 1140 | -- |

**1.2. Chemicals**

Jayflexx DINP (Exxon Mobil Chemicals) is a high molecular weight phthalate plasticizer (CAS 28553-12-0). Poly bd® R45 HTLO resin (Cray Valley) is a low molecular weight, liquid hydroxyl terminated polymer of butadiene (CAS 69102-90-5).

**1.3. Particle size distribution (PSD)**

Volume determined median particle size $d_{50}(\text{vol})$ and the volume determined top cut particle size $d_{98}(\text{vol})$ as well as the volume particle sizes $d_{90}(\text{vol})$ and dio(vol) may be evaluated in a wet unit using a Malvern Mastersizer 2000 or 3000 Laser Diffraction System (Malvern Instruments Pic., Great Britain). If not otherwise indicated in the following example section, the volume particle sizes were evaluated in a wet unit using a Malvern Mastersizer 2000 Laser Diffraction System (Malvern Instruments Pic., Great Britain). The $d_{50}(\text{vol})$ or $d_{98}(\text{vol})$ value indicates a diameter value such that 50% or 98% by volume, respectively, of the particles have a diameter of less than this value. The raw data obtained by the measurement was analyzed using the Mie theory, with a particle refractive index of 1.57 and an absorption index of 0.005. The methods and instruments are known to the skilled person and are commonly used to determine particle size distributions of fillers and pigments. The sample was measured in dry condition without any prior treatment.

The weight determined median particle size $d_{50}(\text{wt})$ was measured by the sedimentation method, which is an analysis of sedimentation behaviour in a gravimetric field. The measurement was made with a Sedigraph™ 5120 of Micromeritics Instrument Corporation, USA. The method and the instrument are known to the skilled person and are commonly used to determine particle size distributions of fillers and pigments. The measurement was carried out in an aqueous solution of 0.1 wt% $Na_4P_2O_7$. The samples were dispersed using a high speed stirrer and supersonicated. The processes and instruments are known to the skilled person and are commonly used to determine particle sizes of fillers and pigments.

**1.4. BET specific surface area of a material**

The "specific surface area" (expressed in $m^2/g$) of a material as used throughout the present document is determined by the Brunauer Emmett Teller (BET) method with nitrogen as adsorbing gas and by use of a ASAP 2460 instrument from Micromeritics. The method is well known to the skilled person and defined in ISO 9277:2010. Samples are conditioned at 100 °C under vacuum for a period of 60 min prior to measurement. The total surface area (in $m^2$) of said material can be obtained by multiplication of the specific surface area (in $m^2/g$) and the mass (in g) of the material.

**1.5. Viscosity measurement**

The rheological properties of the liquid samples were determined using an Anthon Paar Physica MCR301 rheometer, equipped with a parallel plate geometry. The measurement gap was set to 1.000 mm and the temperature was controlled to 23.00°C by mean of a Peltier bottom plate. A constant shear rate of 1 $s^{-1}$ was applied for 10 seconds, taking a reading of viscosity every second. The last reading of the series is used for calculation.

**1.6. Thermal conductivity evaluation**

The thermal conductivity of the samples has been measured using a TEMPOS Thermal Properties analyzer (METER Group) equipped with dual-needle (30 mm long, 1.3 mm diameter) SH-3 sensor. In the measuring principle utilized by said analyzer, heat is applied to the heated needle for a set heating time and temperature is measured in the monitoring needle 6 mm distant during heating and during a cooling period following heating. The readings are then processed by subtracting the ambient temperature and the rate of drift. The resulting data are fit to Equation 1 and Equation 2 below using a least squares procedure.

$$\Delta T = \left(\frac{q}{4\pi k}\right) Ei\left(\frac{-r^2}{4Dt}\right) \qquad t \le t_h \qquad \text{Equation 1}$$

$$\Delta T = \left(\frac{q}{\pi k}\right)\left\{ Ei\left[\frac{-r^2}{4D(t-t_h)}\right] - Ei\left(\frac{-r^2}{4Dt}\right) \right\} \qquad t > t_h \qquad \text{Equation 2}$$

Where

$\Delta T$     is the temperature rise at the measuring needle,
$q$     is the heat input at the heated needle (W/m),
$k$     is the thermal conductivity (W/mK),
$r$     is the distance from the heated needle to the measuring needle,
$D$     is the thermal diffusivity ($m^2/s$),

*t*        is time (s), and

$t_h$        is the heating time (s).

$E_i$        is the exponential integral and is approximated using polynomials (Abramowitz and Stegun 1972).

The TEMPOS analyzer collects data for at least 30 s to determine the temperature drift. If the drift is below a threshold, current is applied to the heater needle for 30 s, during which time the temperature of the sensing needle is monitored. At 30 s the current is shut off and the temperature is monitored for another 90 s. The starting temperature and drift are then subtracted from the temperatures giving the *ΔT* values needed to solve Equation 1 and Equation 2. Since the values of q, *r, t and $t_h$,* are known, the values of k and D can be solved. This could be done using traditional nonlinear least squares (Marquardt 1963), but those methods often get stuck in local minima and fail to give the correct result. If a value is chosen for D in Equation 1 and Equation 2, the calculation becomes a linear least squares problem. It is then searched for the value of D that minimizes the squared differences between measured and modeled temperature. This method gives the global minimum, and may be as fast as traditional nonlinear least squares. Once k and D are determined, the volumetric specific heat capacity can be computed using Equation 3 below.

$$\rho C = \frac{k}{D} \qquad\qquad \text{Equation 3}$$

To analyze a sample, the polymeric formulation (described in section 2 below) was transferred into a polypropylene container of diameter 34 mm and height of 75 mm, and was stirred in a SpeedMixer DAC 600.1 FVZ at 800 rpm for 30 seconds to remove air inclusions. The sample was allowed to condition at room temperature (20±2°C), for no less than 4 hours. The SH-3 type sensor with axial cable configuration was positioned in the center of the liquid sample with the help of a lab clamp. Then, the two-pronged sensor was fully immersed in the liquid sample with the help of laboratory jack model 110 (Rudolf Grauer AG), ensuing contact between the liquid sample and the needles. Finally, thermal conductivity was measured according to the description above.

**2. Preparation of polymeric formulations**

Within a speed mixer propylene cup, an equal amount of plasticizer and polyol was added, and stirred at 800 rpm, during 30 seconds, in a SpeedMixer DAC 600.1 FVZ. The storage life of the obtained liquid polymer phase was 4 hours at ambient temperature.

Within a propylene speed mixer cup, a thermally conductive filler composition being composed of fillers from different size ranges was weighed according to Table 1 below. Then, the prepared liquid polymer phase was added. The mixture was stirred in a SpeedMixer DAC 600.1 FVZ at 2300 rpm for 30 seconds at ambient temperature.

**3. Examples**

**3.1. Example 1**

Polymeric compositions were prepared according to Table 1 below using thermally conductive filler compositions being composed of two or three different filler fractions designated as coarse, mid, and fine fraction.

Table 1: Composition of the prepared polymeric compositions (vol.-% are based on total volume of the thermally conductive filler composition; comp.: comparative).

| Sample | Coarse fraction | | | Mid fraction | | | Fine fraction | | | Liquid polymer phase [g] |
|---|---|---|---|---|---|---|---|---|---|---|
| | Filler | vol.-% | weight [g] | Filler | vol.-% | weight [g] | Filler | vol.-% | weight [g] | |
| 1 (comp.) | MGO1 | 0 | 0.0 | ATH2 | 25 | 18.0 | ATH1 | 75 | 54.0 | 16.0 |
| 2 (comp.) | MGO1 | 100 | 107.4 | ATH2 | 0 | 0.0 | ATH1 | 0 | 0.0 | 16.0 |
| 3 (comp.) | MGO1 | 0 | 0.0 | ATH2 | 100 | 72.0 | ATH1 | 0 | 0.0 | 16.0 |
| 4 | MGO1 | 25 | 26.9 | ATH2 | 25 | 18.0 | ATH1 | 50 | 36.0 | 16.0 |

(continued)

| Sample | Coarse fraction | | | Mid fraction | | | Fine fraction | | | Liquid polymer phase [g] |
|---|---|---|---|---|---|---|---|---|---|---|
| | Filler | vol.-% | weight [g] | Filler | vol.-% | weight [g] | Filler | vol.-% | weight [g] | |
| 5 | MGO1 | 50 | 53.7 | ATH2 | 25 | 18.0 | ATH1 | 25 | 18.0 | 16.0 |
| 6 | MGO1 | 75 | 80.6 | ATH2 | 0 | 0.0 | ATH1 | 25 | 18.0 | 16.0 |
| 7 | MGO1 | 25 | 26.9 | ATH2 | 75 | 54.0 | ATH1 | 0 | 0.0 | 16.0 |
| 8 (comp.) | MGO1 | 0 | 0.0 | ATH2 | 50 | 36.0 | ATH1 | 50 | 36.0 | 16.0 |
| 9 | MGO1 | 25 | 26.9 | ATH2 | 50 | 36.0 | ATH1 | 25 | 18.0 | 16.0 |
| 10 (comp.) | MGO1 | 0 | 0.0 | ATH2 | 75 | 54.0 | ATH1 | 25 | 18.0 | 16.0 |
| 11 | MGO1 | 50 | 53.7 | ATH2 | 50 | 36.0 | ATH1 | 0 | 0.0 | 16.0 |
| 12 | MGO1 | 50 | 53.7 | ATH2 | 0 | 0.0 | ATH1 | 50 | 36.0 | 16.0 |
| 13 | MGO1 | 75 | 80.6 | ATH2 | 25 | 18.0 | ATH1 | 0 | 0.0 | 16.0 |

The thermal conductivity and the viscosity of the prepared polymeric compositions were measured according to the methods described above and the results have been processed using statistical methods (Design Expert version 10.0.8, Stat-Ease Inc.). The obtained thermal conductivity and viscosity values are presented in Table 2 below.

Table 2: Results of thermal conductivity and viscosity measurements (vol.-% are based on total volume of the polymeric composition and wt.-% are based on total weight of the polymeric composition; comp.: comparative).

| Sample | Filler volume [vol.-%] | Filler weight [wt.-%] | Thermal conductivity [W/m·K] | Viscosity [Pa·s] |
|---|---|---|---|---|
| 1 (comp.) | 65 | 82 | 1.22 | too high, >20'000 Pa·s |
| 2 (comp.) | 65 | 87 | 1.53 | 455 |
| 3 (comp.) | 65 | 82 | 1.32 | 2268 |
| 4 | 65 | 83 | 1.55 | 286 |
| 5 | 65 | 85 | 1.86 | 158 |
| 6 | 65 | 86 | 1.96 | 200 |
| 7 | 65 | 83 | 1.51 | 628 |
| 8 (comp.) | 65 | 82 | 1.26 | 458 |
| 9 | 65 | 83 | 1.57 | 219 |
| 10 (comp.) | 65 | 82 | 1.30 | 412 |
| 11 | 65 | 85 | 1.67 | 294 |
| 12 | 65 | 85 | 1.89 | 303 |
| 13 | 65 | 86 | 1.81 | 284 |

All inventive polymeric compositions showed good thermal conductivity and a viscosity in a processable range. The highest thermal conductivity was obtained for a polymeric composition comprising a thermally conductive filler mixture that was composed of a coarse fraction and a fine fraction (Sample 6), while the viscosity was minimized by using thermally conductive filler compositions, which were composed of three fractions.

### 3.2. Example 2

Polymeric compositions were prepared according to Table 3 below using thermally conductive filler compositions being composed of two or three different filler fractions designated as coarse, mid, and fine fraction.

Table 3: Composition of the prepared polymeric compositions (vol.-% are based on total volume of the thermally conductive filler composition; comp.: comparative).

| Sample | Coarse fraction | | | Mid fraction | | | Fine fraction | | | Liquid polymer phase [g] |
|---|---|---|---|---|---|---|---|---|---|---|
| | Filler | vol.-% | weight [g] | Filler | vol.-% | weight [g] | Filler | vol.-% | weight [g] | |
| 14 (comp.) | CC1 | 0 | 0.0 | MGO2 | 100 | 107.4 | ATH1 | 0 | 0.0 | 16.0 |
| 15 | CC1 | 29 | 8.6 | MGO2 | 43 | 46.4 | ATH1 | 28 | 20.2 | 16.0 |
| 16 (comp.) | CC1 | 70 | 21.0 | MGO2 | 30 | 32.2 | ATH1 | 0 | 0.0 | 16.0 |
| 17 (comp.) | CC1 | 80 | 24.0 | MGO2 | 0 | 0.0 | ATH1 | 20 | 14.4 | 16.0 |
| 18 (comp.) | CC1 | 25 | 7.6 | MGO2 | 0 | 0.0 | ATH1 | 75 | 53.9 | 16.0 |

The thermal conductivity and the viscosity of the prepared polymeric compositions were measured according to the methods described above and the results have been processed using statistical methods (Design Expert version 10.0.8, Stat-Ease Inc.). The obtained thermal conductivity and viscosity values are presented in Table 4 below.

Table 4: Results of thermal conductivity and viscosity measurements (vol.-% are based on total volume of the polymeric composition and wt.-% are based on total weight of the polymeric composition; comp.: comparative).

| Sample | Filler volume [vol.-%] | Filler weight [wt.-%] | Thermal conductivity [W/m·K] | Viscosity [Pa·s] |
|---|---|---|---|---|
| 14 (comp.) | 65 | 87 | 1.81 | 1441 |
| 15 | 65 | 82 | 1.43 | 333 |
| 16 (comp.) | 65 | 77 | 1.05 | 1354 |
| 17 (comp.) | 65 | 71 | 0.95 | 495 |
| 18 (comp.) | 65 | 79 | 1.09 | 3191 |

All prepared polymeric compositions showed good thermal conductivity and a viscosity in a processable range. The inventive polymeric composition (Sample 15), showed a low viscosity at a good thermal conductivity.

### 3.3. Example 3

Polymeric compositions were prepared according to Table 5 below using thermally conductive filler compositions being composed of two or three different filler fractions designated as coarse, mid, and fine fraction.

Table 5: Composition of the prepared polymeric compositions (vol.-% are based on total volume of the thermally conductive filler composition; comp.: comparative).

| Sample | Coarse fraction | | | Mid fraction | | | Fine fraction | | | Liquid polymer phase [g] |
|---|---|---|---|---|---|---|---|---|---|---|
| | Filler | vol.-% | weight [g] | Filler | vol.-% | weight [g] | Filler | vol.-% | weight [g] | |
| 19 | MGO1 | 64 | 68.7 | ATH2 | 11 | 7.92 | ATH1 | 25 | 18.0 | 10.0 |
| 20 | MGO1 | 64 | 68.7 | ATH2 | 11 | 7.92 | ATH1 | 25 | 18.0 | 13.0 |

(continued)

| Sample | Coarse fraction | | | Mid fraction | | | Fine fraction | | | Liquid polymer phase [g] |
|---|---|---|---|---|---|---|---|---|---|---|
| | Filler | vol.-% | weight [g] | Filler | vol.-% | weight [g] | Filler | vol.-% | weight [g] | |
| 21 | MGO1 | 64 | 68.7 | ATH2 | 11 | 7.92 | ATH1 | 25 | 18.0 | 16.0 |
| 22 | CC1 | 21 | 17.0 | MGO2 | 52 | 55.85 | ATH1 | 27 | 19.4 | 16.0 |
| 23 | CC1 | 21 | 17.0 | MGO2 | 52 | 55.85 | ATH1 | 27 | 19.4 | 13.0 |
| 24 | CC1 | 21 | 17.0 | MGO2 | 52 | 55.85 | ATH1 | 27 | 19.4 | 10.0 |
| 25 (comp.) | - | - | - | ATH3 | 100 | 72.0 | - | - | - | 10.0 |
| 26 (comp.) | - | - | - | ATH3 | 100 | 72.0 | - | - | - | 13.0 |
| 27 (comp.) | - | - | - | ATH3 | 100 | 72.0 | - | - | - | 16.0 |

The thermal conductivity and the viscosity of the prepared polymeric compositions were measured according to the methods described above and the results have been processed using statistical methods (Design Expert version 10.0.8, Stat-Ease Inc.). The obtained thermal conductivity and viscosity values are presented in Table 6 below.

Table 6: Results of thermal conductivity and viscosity measurements (vol.-% are based on total volume of the polymeric composition and wt.-% are based on total weight of the polymeric composition; comp.: comparative).

| Sample | Filler volume [vol.-%] | Filler weight [wt.-%] | Thermal conductivity [W/m·K] | Viscosity [Pa·s] |
|---|---|---|---|---|
| 19 | 65 | 85 | 1.52 | 331 |
| 20 | 70 | 88 | 1.84 | 1045 |
| 21 | 75 | 90 | 2.53 | 4352 |
| 22 | 75 | 90 | 3.50 | 1688 |
| 23 | 70 | 88 | 2.53 | 475 |
| 24 | 65 | 86 | 2.02 | 131 |
| 25 (comp.) | 75 | 88 | 2.08 | 4134 |
| 26 (comp.) | 70 | 85 | 1.56 | 697 |
| 27 (comp.) | 65 | 82 | 1.40 | 257 |

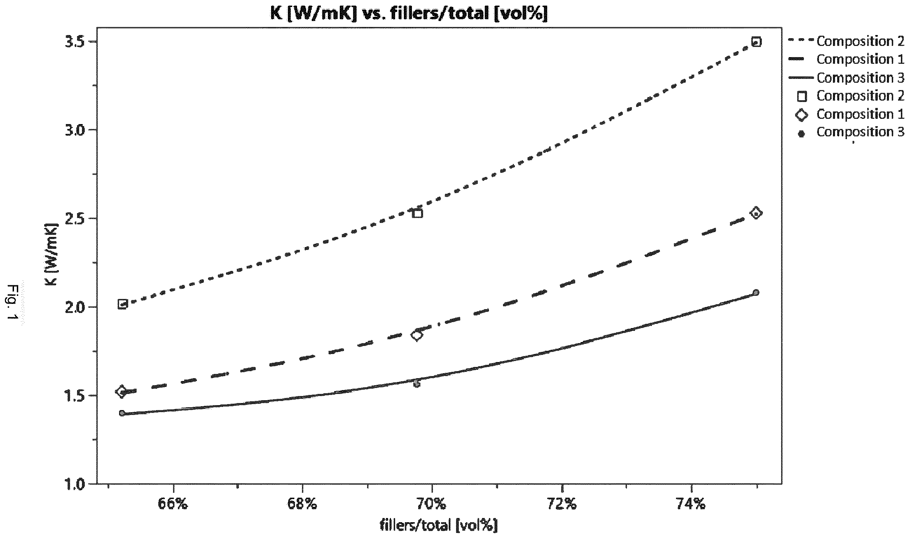

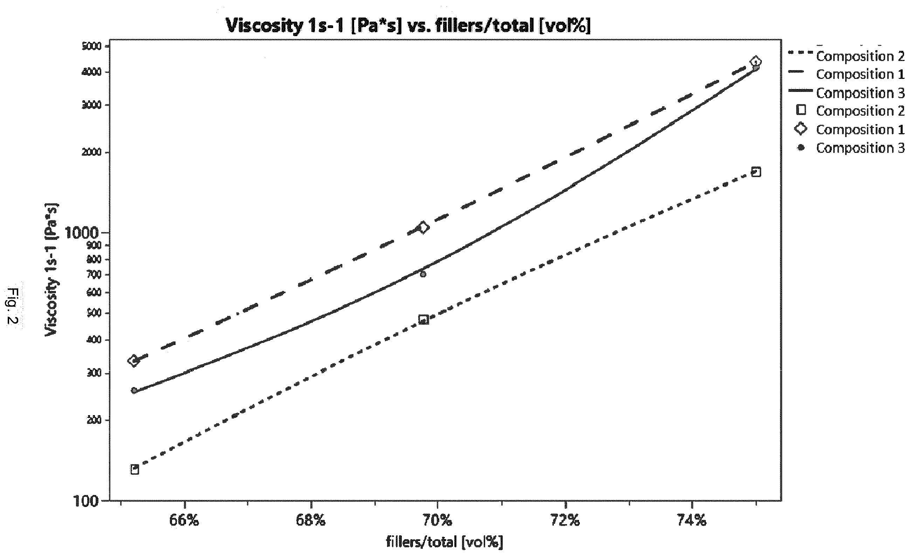

It can be gathered from Figs. 1 and 2 that inventive samples 22 to 24 containing the same thermally conductive filler composition at different concentrations (composition 2) exhibited a higher thermal conductivity at lower viscosity compared to the comparative samples 25 to 27 (composition 3). Additionally, the data show that inventive samples 19 to 21 containing the same thermally conductive filler composition at different concentrations (composition 2) provided a higher thermal conductivity at comparable viscosity compared to composition 3. Thus, the inventive thermally conductive filler compositions can provide a higher thermal conductivity at lower or comparable viscosity compared to conventional thermally conductive filler compositions.

Claims

1.  A thermally conductive filler composition comprising
    a mixture of fillers comprising at least one inorganic aluminium compound and at least one inorganic magnesium compound,
    wherein the fillers are in form of particles having a volume median particle size $d_{50}$ from 0.1 to 500 $\mu$m, and

the mixture of fillers comprises a first filler fraction A having a volume median particle size $d_{50}(A)$ and a second filler fraction B having a volume median particle size $d_{50}(B)$,
wherein $d_{50}(A)$ is greater than $d_{50}(B)$ and $d_{50}(A)$ differs from $d_{50}(B)$ by at least 10%.

2. The thermally conductive filler composition of claim 1, wherein the thermally conductive filler composition has a thermal conductivity of at least 0.75 W/m·K, preferably at least 1 W/m·K, more preferably at least 1.2 W/m·K, and most preferably at least 1.5 W/m·K,
wherein the thermal conductivity of the filler composition is measured in form of a standard polymer composition,
wherein the standard polymer composition consists of 65 vol.-% filler composition and 35 vol.-% standard solution,
wherein the standard solution consists of 50 wt.-% diisononyl-phthalat and 50 wt.-% hydroxyl-terminated polybutadiene, and
the thermal conductivity is determined with a TEMPOS thermal properties analyzer equipped with a dual-needle SH-3 sensor.

3. The thermally conductive filler composition of any one of the preceding claims,
wherein the thermally conductive filler composition comprises
the first filler fraction A in an amount from 1 to 99 vol.-%, based on the total volume of the filler composition, preferably from 5 to 90 vol.-%, more preferably from 10 to 85 vol.-%, even more preferably from 20 to 80 vol.-%, and most preferably from 25 to 75 vol.-%, and
the second filler fraction B in an amount from 1 to 99 vol.-%, based on the total volume of the filler composition, preferably from 10 to 95 vol.-%, more preferably from 15 to 90 vol.-%, even more preferably from 20 to 80 vol.-%, and most preferably from 25 to 75 vol.-%.

4. The thermally conductive filler composition of any one of the preceding claims,
wherein
the at least one inorganic aluminium compound is selected from the group consisting of aluminium hydroxide, aluminium oxide, aluminium nitride, and mixtures thereof, preferably aluminium hydroxide, and/or
the at least one inorganic magnesium compound is selected from the group consisting of magnesium hydroxide, magnesium oxide, magnesium carbonate, and mixtures thereof, preferably magnesium oxide.

5. The thermally conductive filler composition of any one of the preceding claims,
wherein the fillers have a volume median particle size $d_{50}$ from 0.5 to 450 μm, preferably from 1 to 400 μm, more preferably from 1.5 to 300 μm, and most preferably from 2 to 250 μm, and/or
the first filler fraction A has a volume median particle size $d_{50}(A)$ from 10 to 450 μm, preferably from 15 to 400 μm, more preferably from 20 to 300 μm, and most preferably from 25 to 250 μm, and/or
the second filler fraction B has a volume median particle size $d_{50}(B)$ from 0.1 to 250 μm, preferably from 0.5 to 200 μm, more preferably from 1 to 100 μm, and most preferably from 2 to 70 μm.

6. The thermally conductive filler composition of any one of the preceding claims,
wherein dso(A)differs from $d_{50}(B)$ by at least 15%, preferably by at least 20%, more preferably by at least 25%, and most preferably by at least 30%.

7. The thermally conductive filler composition of any one of the preceding claims,
wherein the mixture of fillers comprises a third filler fraction C having a volume median particle size $d_{50}(C)$,
wherein $d_{50}(C)$ is smaller than $d_{50}(B)$ and $d_{50}(C)$ differs from $d_{50}(B)$ by at least 10%, or $d_{50}(C)$ is greater than $d_{50}(A)$ and dso(C) differs from $d_{50}(A)$ by at least 10%.

8. The thermally conductive filler composition of any one of the preceding claims,
wherein the thermally conductive filler composition comprises at least one additional filler, preferably in an amount from 0.1 to 50 vol.-%, based on the total volume of the filler composition, more preferably in an amount from 1 to 40 vol.-%, and most preferably from 2 to 30 vol.-%.

9. The thermally conductive filler composition of claim 8, wherein the at least one additional filler is selected from the group consisting of calcium carbonate, calcium oxide, calcium hydroxide, talc, zinc oxide, boron nitride, graphite, metallic fillers, and mixtures thereof, preferably the at least one additional filler is selected from the group consisting of calcium carbonate, calcium oxide, calcium hydroxide, and mixtures thereof, and most preferably the at least one additional filler is calcium carbonate.

10. The thermally conductive filler composition of any one of the preceding claims, wherein the first filler fraction A comprises the at least one inorganic aluminium compound and the second filler fraction B comprises the at least one inorganic magnesium compound, and/or the first filler fraction A comprises the at least one inorganic magnesium compound and the second filler fraction B comprises the at least one inorganic aluminum compound.

11. The thermally conductive filler composition of any one of claims 7 to 10, wherein the first filler fraction A comprises the at least one additional filler and/or the second filler fraction B comprises the at least one additional filler and/or the third filler fraction C comprises the at least one additional filler, preferably the at least one additional filler is selected from the group consisting of calcium carbonate, calcium oxide, calcium hydroxide, and mixtures thereof, and most preferably the at least one additional filler is calcium carbonate.

12. A polymeric composition comprising at least one polymer and a thermally conductive filler composition according to any one of the preceding claims.

13. The polymeric composition of claim 12, wherein the polymeric composition comprises the thermally conductive filler composition in an amount of at least 50 vol.-%, based on the total volume of the polymeric composition, preferably in an amount of at least 60 vol.-%, more preferably in an amount of at least 70 vol.-%, and most preferably in an amount of at least 80 vol.-%.

14. The polymeric composition of claim 12 or 13, wherein the at least one polymer is a resin, a thermoplastic polymer, an elastomer, or a mixture thereof, preferably the at least one polymer is selected from the group consisting of an epoxy resin, an acrylic resin, an urethane resin, a silicone resin, a phenolic resin, homopolymer and/or copolymer of polyolefin, polyamide, polystyrene, polyacrylate, polyvinyl, polyurethane, halogen-containing polymer, polyester, polycarbonate, acrylic rubber, butadiene rubber, acrylonitrile-butadiene rubber, epichlorohydrin rubber, isoprene rubber, ethylene-propylene rubber, ethylene-propylene-diene rubber, nitrile-butadiene rubber, butyl rubber, styrene-butadiene rubber, polyisoprene, hydrogenated nitrile-butadiene rubber, carboxylated nitrile-butadiene rubber, chloroprene rubber, isoprene isobutylene rubber, chloro-isobutene-isoprene rubber, brominated isobutene-isoprene rubber, silicone rubber, fluorocarbon rubber, polyurethane rubber, polysulfide rubber, thermoplastic rubber, and mixtures thereof.

15. The polymeric composition of any one of claims 12 to 14, wherein the polymeric composition is a thermally conductive masterbatch, a thermally conductive grease, a thermally conductive moldable composition, a thermally conductive extrusionable composition, a thermally conductive gap filler, a thermally conductive adhesive, a thermally conductive gel, a thermally conductive potting compound, a thermally conductive encapsulation agent, or a thermally conductive paste.

16. An article comprising the polymeric composition of any one of claims 12 to 15, wherein the article is an electrical component, an electronic component, an automotive component, an aerospace component, a railway component, a maritime component, a medical component, a heat dissipating device, or a non-woven material, preferably an automotive power electrical component, an aerospace power electrical component, a railway power electrical component, a maritime power electrical component, a battery, a battery cell, a battery module, an integrated circuit, a light emitting diode, a lamp socket, a semiconductor package, a cooling fan, a connector, a switch, a case, a housing, an adhesive tape, an adhesive pad, an adhesive sheet, a vibration damping article, a gasket, a spacer, a sealant, a heat sink, a heat spreader, a fire blanket, or an oven cloth.

17. Use of a thermally conductive filler composition according to claims 1 to 11 as a thermal conductivity enhancer for a polymeric composition.

18. Use of a thermally conductive filler composition according to claims 1 to 11 in aerospace applications, automotive applications, railway applications, maritime applications, electronic applications, electric vehicle applications, or medical applications.

Fig. 1

Fig. 2

Europäisches
Patentamt

European
Patent Office

Office européen
des brevets

# EUROPEAN SEARCH REPORT

Application Number

EP 21 16 5697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 501 135 A2 (POLYMATECH CO LTD [JP]) 26 January 2005 (2005-01-26) | 1-6,10, 13-18 | INV. C08K3/105 |
| A | * paragraph [0023]; claims; examples 1,4,5 * | 7-9,11, 12 | C08K3/22 C08K3/26 |
| X | JP 5 775778 B2 (ARON KASEI KK) 9 September 2015 (2015-09-09) | 1-6,10, 13-18 | ADD. C08K3/28 |
| A | * paragraphs [0001] - [0002]; claims; examples 5-18 * | 7-9,11, 12 | |
| X | US 2015/299550 A1 (KUSUNOKI TOMOKAZU [JP] ET AL) 22 October 2015 (2015-10-22) * paragraphs [0001], [0002]; claims; examples 2,5,8 * | 1-18 | |
| X | JP 5 450216 B2 (ZIPPERTUBING (JAPAN) LTD) 26 March 2014 (2014-03-26) * example 6 * | 1,12-15 | |
| X | JP 2011 016962 A (SEKISUI CHEMICAL CO LTD) 27 January 2011 (2011-01-27) | 1-8,10, 12-18 | TECHNICAL FIELDS SEARCHED (IPC) |
| A | * examples 4,5,6,15 * | 9,11 | C08K |

The present search report has been drawn up for all claims

| Place of search | Date of completion of the search | Examiner |
|---|---|---|
| Munich | 8 September 2021 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 5697

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2021

| Patent document cited in search report | | Publication date | Patent family member(s) | | Publication date |
|---|---|---|---|---|---|
| EP 1501135 | A2 | 26-01-2005 | CN 1576349 A | | 09-02-2005 |
| | | | EP 1501135 A2 | | 26-01-2005 |
| | | | KR 20050011724 A | | 29-01-2005 |
| | | | TW I247446 B | | 11-01-2006 |
| | | | US 2005022966 A1 | | 03-02-2005 |
| JP 5775778 | B2 | 09-09-2015 | JP 5775778 B2 | | 09-09-2015 |
| | | | JP 2013072032 A | | 22-04-2013 |
| US 2015299550 | A1 | 22-10-2015 | CN 103987790 A | | 13-08-2014 |
| | | | DE 112012005505 T5 | | 18-06-2015 |
| | | | JP WO2013100174 A1 | | 11-05-2015 |
| | | | US 2015299550 A1 | | 22-10-2015 |
| | | | WO 2013100174 A1 | | 04-07-2013 |
| JP 5450216 | B2 | 26-03-2014 | JP 5450216 B2 | | 26-03-2014 |
| | | | JP 2011219565 A | | 04-11-2011 |
| JP 2011016962 | A | 27-01-2011 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004108852 A1
- WO 2021006646 A1
- EP 2447213 A1
- EP 2524898 A1
- EP 2371766 A1
- EP 1712597 A1
- EP 1712523 A1
- WO 2013142473 A1

- WO 0039222 A1
- WO 2004083316 A1
- WO 2005121257 A2
- WO 2009074492 A1
- EP 2264108 A1
- EP 2264109 A1
- US 20040020410 A1

**Non-patent literature cited in the description**

- **CUI et al.** *J. Mater. Chem. C,* 2020, (8), 10568-10586

- *CHEMICAL ABSTRACTS,* 28553-12-0
- *CHEMICAL ABSTRACTS,* 69102-90-5